Europäisches Patentamt

European Patent Office

Office européen des brevets

(19)

(11) Veröffentlichungsnummer : **0 141 093**
**B1**

(12) # EUROPÄISCHE PATENTSCHRIFT

(45) Veröffentlichungstag der Patentschrift :
30.09.87

(21) Anmeldenummer : 84109740.5

(22) Anmeldetag : 16.08.84

(51) Int. Cl.⁴ : **B 60 G  3/20**, B 62 D  7/20,
**B 60 G  7/00**

(54) **Radaufhängung für lenkbare Vorderräder von Kraftfahrzeugen.**

(30) Priorität : 30.08.83 DE 3331282

(43) Veröffentlichungstag der Anmeldung :
15.05.85 Patentblatt 85/20

(45) Bekanntmachung des Hinweises auf die Patenterteilung : 30.09.87 Patentblatt 87/40

(84) Benannte Vertragsstaaten :
DE FR GB IT SE

(56) Entgegenhaltungen :
DE-A- 1 755 113
DE-A- 2 332 387
DE-C-   868 117
FR-A- 1 054 997
GB-A- 1 518 375
US-A- 3 079 137

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Matschinsky, Wolfgang, Dipl.-Ing.
Korbinianplatz 9
D-8000 München 40 (DE)

(74) Vertreter : Dexheimer, Rolf
Bayerische Motoren Werke Aktiengesellschaft Postfach 40 02 40 Petuelring 130 - AJ-31
D-8000 München 40 (DE)

EP 0 141 093 B1

**Beschreibung**

Die Erfindung bezieht sich auf eine Radaufhängung für lenkbare Vorderräder von Kraftfahrzeugen, mit einem das Rad lagernden Radträger, an dem eine Spurstange angreift und der gelenkig mit einem oberen und einem unteren jeweils am Fahrzeugaufbau oder dgl. angelenkten Querlenker verbunden ist, wobei der untere mit der Tragfeder zusammenwirkende Querlenker mit zwei in Fahrzeuglängsrichtung hintereinander liegenden Lenkerlagern am Fahrzeugaufbau oder dgl. gelagert und verwindungssteif ausgebildet sowie am äußeren Ende über eine ecksteife Drehlagerung mit im wesentlichen längs verlaufender Drehachse mit einem Koppelstück verbunden ist, an dem seinerseits über eine ebenfalls ecksteife Schwenklagerung mit zumindest annähernd vertikaler Schwenkachse der Radträger gelagert ist.

Bei einer bekannten Achse etwa dieser Bauart (DE-C-868 117) ist der obere Querlenker durch zwei parallele, auch als Lenker wirkende Spurstangen ersetzt. Der untere Querlenker ist drehsteif ausgebildet, um allein die auftretenden Bremsdrehmomente aufnehmen zu können.

Lenkt man die Querlenker derartiger Radaufhängungen oder üblicher Radaufhängungen mit Doppelquerlenker (beide beispielsweise in Dreieckslenkerbauart) so an, daß zu Komfortzwecken eine längselastische Führung des Rades gewährleistet ist, entstehen Probleme, da dann jeder der Lenker in Längsrichtung erheblich weicher als die gewünschte (gesamte) Längselastizität des Rades aufgehängt werden muß. Damit ergibt sich beim Bremsen ein starkes « Aufziehen » des Radträgers um eine Querachse. Eine derartige um eine Querachse bei der geschilderten Belastung zu wenig torsionssteife Radaufhängung führt zu einer beträchtlichen Nachlaufverringerung, die unerwünscht ist.

Wird etwa ein kleiner oder gar negativer Lenkrollradius angestrebt, um ein Verziehen der Lenkung bei einseitig wirkenden Bremskräften zu vermeiden, kann dies durch einen großen Spreizungswinkel ermöglicht werden. Ein großer Spreizungswinkel ergibt beim Lenken eine große Veränderung der Nachlaufstrecken, insbesondere eine große Differenz der Nachlaufstrecken zwischen äußerem und innerem Rad. Wenn aus fahrdynamischen Gründen die Lenkgeometrie nicht nach der sogenannten Ackermannfunktion ausgelegt ist (einwandfreies Abrollen aller Räder bei langsamer Fahrt), führt die Nachlaufstreckendifferenz infolge der Spurlaufabweichungen zu Seitenkräften der Reifen und zu einer Beeinträchtigung des selbsttätigen Lenkungsrücklaufes bei langsamer Fahrt. Gelingt es dagegen, die Spreizung klein zu halten, so ist andererseits wiederum die Gewichtsrückstellung sehr klein, so daß die Zentrierung der Lenkung bzw. der Geradeauslauf ebenfalls leiden.

Der Erfindung liegt die Aufgabe zugrunde, eine Radaufhängung der vorausgesetzten Bauart zu schaffen, die die oben erwähnten günstigen Auslegungsparameter ohne deren gegenseitige negative Beeinflussung zuläßt und dabei eine güte Gewichtsrückstellung gewährleistet.

Diese Aufgabe wird bei einer Radaufhängung der eingangs genannten Art dadurch gelöst, daß die Schwenklagerung axial verschiebbar ist und daß Radträger und Koppelstück gelenkig mit einer annähernd vertikalen Zugstange verbunden sind. Dank dieser Maßnahmen wird beim Lenkeinschlag die Zugstange gegenüber der im wesentlichen vertikalen Schwenkachse, um die der Radträger gegenüber dem Koppelstück drehbar ist, schräg gestellt. Dies führt dazu, daß das Koppelstück gegenüber dem Radträger nach oben gezogen wird, was wegen der axialen Verschiebbarkeit der Schwenklagerung möglich ist, und ein Anheben des Vorderwagens bei Lenkeinschlag bewirkt. Durch Wahl der Länge der Zugstrebe und der Abstände der Angriffspunkte ihrer Gelenke von der Schwenkachse kann das Maß des Anhebens des Vorderwagens und damit das Ausmaß der Gewichtsrückstellung in einem weiten Bereich variert werden.

Es ist zwar schon bekannt geworden (DE-A-2 32 387), bei lenkbaren Doppelquerlenkerachsen zwischen dem unteren Querlenker und dem Radträger zum Erhalt einer Gewichtsrückstellung ein Schraubgelenk mit einer nicht linearen Charakteristik der Axialverschiebung vorzusehen, doch hat eine derartige Bauart beträchtliche Nachteile. Derartige Schraubgelenke sind hinsichtlich Verschleiß, Klappern, Spielfreiheit über einen längeren Lebensdauerabschnitt des Fahrzeugs kaum beherrschbar. Da für eine nennenswerte Gewichtsrückstellung ein Anheben des Vorderwagens um mehrere Millimeter erforderlich ist, müßte das Schraubgelenk eine ganz beträchtliche Steigung haben, was aber hinsichtlich des Wirkungsgrades und insbesondere auch hinsichtlich des bereits erwähnten Verschleißes kaum realisierbar wäre. Ein Schraubgelenk hat schließlich noch den weiteren wesentlichen Nachteil, daß eines der beiden lenkbaren Räder zwar ein partielles Anheben des Vorderwagens bewirken könnte, während das andere Rad jedoch gleichzeitig ein Absenken verursachen würde. Insgesamt wäre kaum ein nennenswertes Anheben möglich. Sieht man deswegen Schraubgelenke mit einer nicht linearen Charakteristik der Axialverschiebung vor, so sind solche Gelenke äußerst schwer herstellbar.

Die Erfindung und weitere vorteilhafte Einzelheiten der Erfindung, die Gegenstand von Unteransprüchen sind, sind im folgenden anhand eines in der Zeichnung dargestellten Ausführungsbeispiels näher erläutert. Es zeigen

Figur 1 eine perspektivische Ansicht eines Ausführungsbeispiels der neuen Radaufhängung;

Figur 2 eine Teilansicht in Richtung des Pfeiles II in Fig. 1, teilweise im Schnitt, und

Figur 3 eine Teilansicht in Richtung des Pfei-

les III, ebenfalls teilweise im Schnitt.

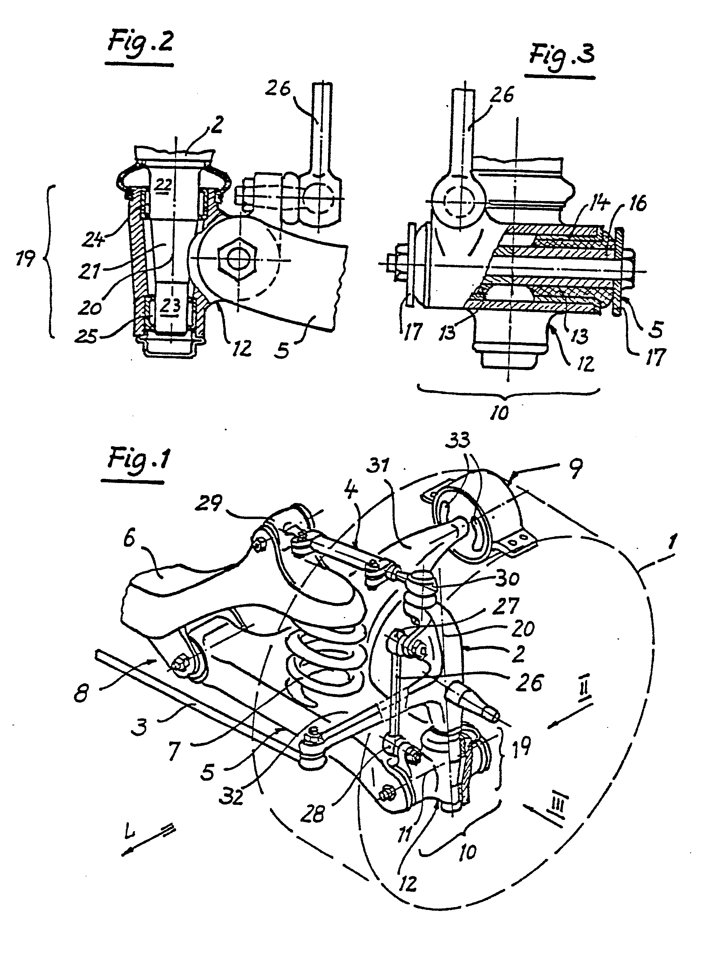

Die in Fig. 1 mit ihren wesentlichen Teilen dargestellte Radaufhängung für lenkbare Vorderräder von Kraftfahrzeugen weist einen das (lediglich angedeutete) Rad 1 lagernden Radträger 2 auf, an dem — zum Erzeugen der Lenkbewegung — eine Spurstange 3 angreift. Der Radträger 2 ist gelenkig mit einem oberen Querlenker 4 und mit einem unteren Querlenker 5 verbunden, die beide gelenkig am Fahrzeugaufbau oder dgl. — beidem dargestellten Ausführungsbeispiel an einem am Fahrzeugaufbau zu befestigenden Querträger 6 — angelenkt sind. Der untere mit der Tragfeder 7 zusammenwirkende Querlenker 6 ist mit zwei in Fahrzeuglängsrichtung L hintereinander liegenden Lenkerlagern 8 und 9 an dem bereits erwähnten Querträger 6 bzw. (direkt) am Fahrzeugaufbau gelagert. Über den Querträger 6 ist der Fahrzeugaufbau auch auf der Tragfeder 7 abgestützt.

Der untere Querlenker 5 ist verwindungssteif ausgebildet. Er ist an seinem äußeren Ende über eine ecksteife Drehlagerung 10 mit im wesentlichen längsverlaufender Drehachse 11 mit einem Koppelstück 12 verbunden. Als Lagerelemente können hierbei gemäß Fig. 3 zwei im Abstand voneinander angeordnete Gummihülsen 13 mit seitlichen Bunden dienen, die unter Zwischenschaltung einer äußeren Lagerhülse 14 in eine Längsbohrung 15 des Koppelstücks 12 gepreßt sind. Die Gummihülsen weisen innere Rohrabschnitte 16 auf, mit denen sie sich gegeneinander und gegen seitliche Lageraugen 17 des unteren Querlenkers 5 abstützen. Die Lageraugen 17 und die Rohrabschnitte 16 sind von einer Befestigungsschraube 18 durchdrungen.

Über eine ebenfalls ecksteife Schwenklagerung 19 mit annähernd vertikaler Schwenkachse 20 ist zur Durchführung der Lenkbewegung der Radträger 2 an dem Koppelstück 12 gelagert.

Die Schwenklagerung 19 ist axial verschiebbar ausgebildet. Hierzu sind an einem nach unten gerichteten Lagerzapfen 21 des Radträgers 2 gemäß Fig. 2 zwei vertikal übereinander liegende zylindrische Lagerflächen 22 und 23 ausgebildet, die bei dem dargestellten Ausführungsbeispiel mit zwei im Koppelstück 12 aufgenommenen Nadellagern 24 und 25 zusammenwirken.

Das Koppelstück 12 und der Radträger 2 sind ferner jeweils gelenkig mit einer annähernd vertikalen Zugstange 26 verbunden. Zur gelenkigen Anlenkung der Zugstange 26 ist ein oberes Kugelgelenk 27 und ein unteres Kugelgelenk 28 vorgesehen. Die Längsachse der Zugstange 26 verläuft parallel zu der Schwenkachse 20, um die der Radträger 2 gegenüber dem Koppelstück 12 gedreht werden kann.

Bei einer Lenkbewegung des Rades 1 aus der in Fig. 1 angedeuteten Geradeausstellung wird die Zugstange 26 gegenüber der Schwenkachse 20 schräg gestellt und der vertikale Abstand der Kugelgelenke 27 und 28 verringert sich. Der untere Querlenker 5 wird auf diese Weise gegenüber dem Rad 1 nach oben gezogen und hebt über die Tragfeder 7 den Fahrzeugaufbau an. Dies führt andererseits zu der bereits eingangs erwähnten guten Gewichtsrückstellung nach dem Loslassen des Lenkrads.

Wie man in Fig. 1 erkennt, ist er obere Querlenker 4 mit nur einem Gelenk 29, zweckmäßig ein Gummigelenk, an dem Querträger 6 (bzw. direkt am Fahrzeugaufbau) gelagert. Der obere Querlenker 4 kann in seiner Länge verstellbar sein, um ggf. den Sturz des Rades 1 korrigieren zu können.

In Fig. 1 der Zeichnung ist weiter zu erkennen, daß das radseitige Gelenk 30 des oberen Querlenkers 4 — ein Kugelgelenk — gegenüber der Schwenkachse 20, um die der Radträger 2 gegenüber dem Koppelstück 12 beim Lenken verschwenkt wird, zur Fahrzeuginnenseite hin versetzt ist. Dies ergibt beim Lenkeinschlag aus der Geradeausstellung des Rades 1 eine überlagerte Sturzänderung, die den Radaufstandspunkt so verschiebt, daß die durch eine klein gewählte Spreizung ohnehin gering gehaltene Nachlaufstreckenänderung noch zusätzlich verringert wird, was weiterhin vorteilhaft für den Lenkungsrücklauf ist. Obgleich dies an sich die Gewichtsrückstellung geringfügig vermindert, schadet dies nichts, da durch die in ihrer Funktion bereits geschilderte Zugstange 26 in Verbindung mit dem axial verschiebbaren Drehgelenk 19 eine beträchtliche Gewichtsrückstellung realisierbar ist.

Der untere Querlenker 5 hat in Draufsicht eine im wesentlichen winkelförmige Gestalt mit einem Längsarm 31 und einem Querarm 32. Bei dem dargestellten Ausführungsbeispiel ist der Längsarm 31 entgegengesetzt der Fahrtrichtung nach hinten gerichtet. Das etwa am inneren Ende des Querarms 32 und etwa gegenüberliegend zur Radmitte vorgesehene Lenkerlager 8 ist relativ steif ausgebildet, während das am freien, hinteren Ende des Längsarms 21 vorgesehene Lenkerlager 9 horizontal relativ weich gestaltet ist, was in bekannter Weise beispielsweise durch beidseitige Ausnehmungen 33 im Lagergummi des Lenkerlagers 9 erreichbar ist. Bei Längsstößen, die allein vom unteren Querlenker 5 aufgenommen werden, schwenkt dieser untere Querlenker um das relativ harte vordere Lenkerlager 8 in einer etwa horizontalen Ebene, da das hintere Lenkerlager 9 horizontal in einem gewissen Maß nachgeben kann. Dadurch ist die elastische Längsnachgiebigkeit der Radaufhängung erreicht, die den Fahrkomfort deutlich verbessert.

Da das hintere Lenkerlager 9 vertikal relativ hart ist und wegen der großen Abstützbasis der beiden Lenkerlager 8 und 9 führen dagegen Bremskräfte zu keiner nennenswerten Verdrehung des unteren Querlenkers 5 um eine Querachse, so daß das eingangs erwähnte « Aufziehen » vermieden werden kann.

In Fig. 1 ist weiterhin andeutungsweise zu erkennen, daß die Spurstange 3 in Draufsicht annähernd parallel zur Verbindungslinie zwischen dem relativ harten vorderen Lenkerlager 8 und der Schwenkachse 20 verläuft. Dies führt dazu, daß das horizontal elastisch bei Längsstößen begrenzt nachgebende Rad 1 bei dieser Bewegung keine Lenkwinkeländerung erfährt.

**Patentansprüche**

1. Radaufhängung für lenkbare Vorderräder von Kraftfahrzeugen, mit einem das Rad lagernden Radträger (2), an dem eine Spurstange angreift und der gelenkig mit einem oberen und einem unteren jeweils am Fahrzeugaufbau oder dgl. angelenkten Querlenker (4, 5) verbunden ist, wobei der untere mit der Tragfeder zusammenwirkende Querlenker mit zwei in Fahrzeuglängsrichtung hintereinander liegenden Lenkerlagern (8, 9) am Fahrzeugaufbau oder dgl. gelagert und verwindungssteif ausgebildet sowie am äußeren Ende über eine ecksteife Drehlagerung mit im wesentlichen längs verlaufender Drehachse mit einem Koppelstück (12) verbunden ist, an dem seinerseits über eine ebenfalls ecksteife Schwenklagerung mit zumindest annähernd vertikaler Schwenkachse der Radträger gelagert ist, dadurch gekennzeichnet, daß die Schwenklagerung (19) axial verschiebbar ist und daß Radträger (2) und Koppelstück (12) gelenkig mit einer annähernd vertikalen Zugstange (26) verbunden sind.

2. Radaufhängung nach Anspruch 1, dadurch gekennzeichnet, daß die Längsachse der Zugstange (26) parallel zu der Schwenkachse (20) verläuft.

3. Radaufhängung nach Anspruch 1, dadurch gekennzeichnet, daß der obere Querlenker (4) mit nur einem Gelenk (29) am Fahrzeugaufbau oder dgl. (Querträger 6) gelagert ist.

4. Radaufhängung nach Anspruch 3, dadurch gekennzeichnet, daß der obere Querlenker (4) in seiner Länge verstellbar ist.

5. Radaufhängung nach Anspruch 3, dadurch gekennzeichnet, daß das radseitige Gelenk (30) des oberen Querlenkers (4) gegenüber der Schwenkachse (20) zur Fahrzeuginnenseite hin versetzt ist.

6. Radaufhängung nach Anspruch 1, dadurch gekennzeichnet, daß der untere Querlenker (5) in Draufsicht eine im wesentlichen winkelförmige Gestalt mit einem Längsarm (31) und einem Querarm (32) hat, wobei das etwa am inneren Ende des Querarms (32) und etwa gegenüberliegend zur Radmitte vorgesehene Lenkerlager (8) relativ steif ist, während das am freien Ende des Längsarms (21) vorgesehene Lenkerlager (9) horizontal relativ weich ist.

7. Radaufhängung nach Anspruch 6, dadurch gekennzeichnet, daß die Spurstange (3) in Draufsicht zumindest annähernd parallel zur Verbindungslinie zwischen dem relativ harten Lenkerlager (8) und der Schwenkachse (20) verläuft.

**Claims**

1. A wheel suspension for the steerable front wheels of motor vehicles having a wheel carrier (2) carrying the wheel, the carrier being engaged by a track rod and being articulatedly connected to an upper and a lower transverse link (4, 5) which are each articulated to the vehicle bodywork or the like, wherein the lower transverse link which co-operates with the carrier spring and is made torsionally rigid, is mounted with two link bearings (8, 9) lying one behind the other in the longitudinal direction of the vehicle on the vehicle bodywork or the like and is connected at the outer end, through an angularly-fixed pivot mounting with a substantially longitudinally-extending axis of rotation, to a coupling piece (12) on which, in turn, the wheel carrier is mounted through a likewise angularly-fixed pivot mounting having an at least approximately vertical pivot axis, characterised in that the pivot mounting (19) is axially displaceable and that the wheel carrier (2) and the coupling piece (12) are articulatedly connected to an approximately vertical draw rod (26).

2. A wheel suspension according to Claim 1, characterised in that the longitudinal axis of the draw rod (26) extends parallel to the pivot axis (20).

3. A wheel suspension according to Claim 1, characterised in that the upper transverse link (4) is mounted with only one joint (29) on the vehicle bodywork or the like (transverse girder 6).

4. A wheel suspension according to Claim 3, characterised in that the upper transverse link (4) is adjustable in its position.

5. A wheel suspension according to Claim 3, characterised in that the wheel-end joint (30) of the upper transverse link (4) is offset towards the interior of the vehicle in relation to the pivot axis (20).

6. A wheel suspension according to Claim 1, characterised in that the lower transverse link (5) has, in plan view, a substantially angular configuration with a longitudinal arm (31) and a transverse arm (32), the link bearing (8) provided approximately on the inner end of the transverse arm (32) and approximately oppositely to the wheel centre being relatively rigid, while the link bearing (9) provided on the free end of the longitudinal arm (21) is horizontally relatively soft.

7. A wheel suspension according to Claim 6, characterised in that the track rod (3) extends, in plan view, at least approximately parallel to the line of connection between the relatively hard link bearing (8) and the pivot axis (20).

**Revendications**

1. Suspension pour les roues avant dirigeables de véhicules automobiles, avec un support de roues (2) supportant la roue, sur lequel vient en prise une barre d'accouplement et qui est relié par articulation à un bras transversal oscillant supérieur et à un bras transversal oscillant inférieur, respectivement reliés à la carrosserie du véhicule ou à une partie analogue, le bras transversal oscillant inférieur, coopérant avec le ressort de suspension, étant réalisé de façon à être rigide en torsion et étant monté sur la carrosserie du véhicule ou sur une partie analogue par deux paliers (8, 9) de bras oscillants placés l'un derrière l'autre en direction longitudinale du véhicule, tandis qu'à son extrémité externe ce bras oscillant est relié par l'intermédiaire d'un montage de pivotement en équerre rigide avec un axe de pivotement s'étendant en pratique longitudinalement, avec une pièce d'accouplement (12), sur laquelle est monté de son côté, par l'intermédiaire d'un montage d'oscillation également en équerre rigide, avec un axe d'oscillation au moins approximativement vertical, le support de roues, suspension caractérisée en ce que le montage d'oscillation (19) est susceptible de se déplacer axialement et que le support de roues (2) et la pièce d'accouplement (12) sont reliés par articulation avec une barre de traction (26) approximativement verticale.

2. Suspension selon la revendication 1, caractérisée en ce que l'axe longitudinal de la barre de traction (26) est parallèle à l'axe d'oscillation (20).

3. Suspension selon la revendication 1, caractérisée en ce que le bras oscillant transversal supérieur (4) est monté sur la carrosserie du véhicule ou bien une partie analogue (traverse 6) par une seule articulation (29).

4. Suspension selon la revendication 3, caractérisée en ce que le bras oscillant transversal supérieur (4) est réglable en longueur.

5. Suspension selon la revendication 3, caractérisée en ce que l'articulation côté roues (30) du bras oscillant transversal supérieur (4) est décalée par rapport à l'axe d'oscillation (20) vers le côté interne du véhicule.

6. Suspension selon la revendication 1, caractérisée en ce que le bras oscillant transversal inférieur (5) a, en vue de dessus, une conformation essentiellement en forme d'équerre avec un bras longitudinal (31) et un bras transversal (32), le palier (8) de ce bras oscillant prévu à peu près en face du milieu de la roue étant relativement rigide, tandis que le palier (9) de ce bras oscillant prévu à l'extrémité libre du bras longitudinal (21) est relativement exempt de rigidité en direction horizontale.

7. Suspension selon la revendication 6, caractérisée en ce que la barre d'accouplement (3) est en vue de dessus, au moins approximativement parallèle à la ligne de jonction entre le palier (8) relativement rigide et l'axe d'oscillation (20).

_Fig.2_

_Fig.3_

_Fig.1_